(19) Europäisches Patentamt / European Patent Office / Office européen des brevets

(11) **EP 2 991 262 A1**

(12) **EUROPEAN PATENT APPLICATION**

(43) Date of publication:
02.03.2016 Bulletin 2016/09

(51) Int Cl.:
*H04L 9/32* $^{(2006.01)}$

(21) Application number: 14306338.6

(22) Date of filing: 29.08.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **Gemalto SA**
**92190 Meudon (FR)**

(72) Inventors:
• **Gullberg, Peter**
**13881 GEMENOS (FR)**
• **Girard, Pierre**
**13705 LA CIOTAT (FR)**

(54) **A method for signing data, corresponding first and second device and system**

(57)     The invention relates to a method 20 for signing data.

According to the invention, a first device 12 accesses a first part denoted $s_m$ relating to a private key. A second device 16 accesses a second part denoted $s_s$ relating to the private key. The first and the second part relating to the private key are generated to satisfy a predetermined mathematical formula. The method comprises the following steps. The first device carries out a first part of a data signature by using data to be signed and the first part relating to the private key, a first result being a part-signature. The first device sends to the second device the part-signature 210. The second device carries out a second part of the data signature by using the part-signature and the second part relating to the private key, a second result being a complete signature. And the second device sends to the first device or a third device the complete signature 222.

The invention also relates to corresponding first device, second device and system.

Fig. 2

## Description

### Field of the invention:

The invention relates, in a general manner, to a method for signing data. Moreover, the invention pertains to a first device for signing data.

Furthermore, the invention relates to a second device for signing data.

Finally, the invention pertains to a system for signing data.

The present invention is notably applicable within a mobile radio-telecommunication field wherein a mobile (tele)phone, as a first device, cooperates with a remote server, as a second device.

### State of the art:

It is known to sign data by using a private key that is stored at a mobile phone side and to verify the thus signed data by using a corresponding public key.

However, such a known signature solution is not secure when used by a mobile phone, as a first device, without having any tamper resistant component that stores the private key.

As a matter of fact, the private key may be retrieved from a mobile phone memory that stores the concerned private key.

### Summary of the invention:

The invention mitigates such a security problem by providing a method for signing data.

According to the invention, a first device accesses a first part denoted $s_m$ relating to a private key. A second device accesses a second part denoted $s_s$ relating to the private key. The first and the second part relating to the private key are generated to satisfy a predetermined mathematical formula. The method comprises the following steps. The first device carries out a first part of a data signature by using data to be signed and the first part relating to the private key. A first result is a part-signature. The first device sends to the second device the part-signature. The second device carries out a second part of the data signature by using the part-signature and the second part relating to the private key, a second result being a complete signature. And the second device sends to the first device or a third device the complete signature.

The principle of the invention consists in that a first and a second device both access a share or part of a private (asymmetric) key and are involved to issue an entire or complete signature.

The private key is thus split or divided in two parts, namely a first part $s_m$ relating to the private key at the first device side and a second part $s_s$ relating to the private key at the second device side.

Each device, namely the first and the second device, contributes to determining a complete signature, as a second result issued by the second device.

The first device initiates a determination of the complete signature by issuing an intermediary result, as a first result issued by the first device, by using the first part $s_m$ relating to the private key.

Then, the second device uses the intermediary result and the second part $s_s$ relating to the private key, so as to produce a complete signature.

The complete signature can thus not be generated without a cooperation of the two devices accessing, each, a part of the private key that is to be used.

The proposed solution is therefore secure since a complete signature can only be produced by involving the first and second devices. In other words, none of the two involved devices is able to generate a complete signature alone, i.e. without letting intervene the other of the two involved devices.

Accordingly, contrary to the known solution, the proposed solution allows getting a PKI type signature without needing any tamper resistant component at least at a first device side while being secure.

The proposed solution does not need to involve a user and is therefore convenient for the user.

According to a further aspect, the invention is a first device for signing data.

According to the invention, the first device comprises or is coupled to means for storing a first part denoted $s_m$ relating to a private key. The first and a second part relating to the private key are generated to satisfy a predetermined mathematical formula. The first device is configured to carry out a first part of a data signature by using data to be signed and the first part relating to the private key, a first result being a part-signature. And the first device is configured to send the part-signature.

As first device, it may be any electronic device comprising data processing means, comprising or being connected to data storing means, and comprising at least one Input/Output (or I/O) communication interface.

The first device may be a user terminal.

As user terminal, it may be, for instance, a mobile phone, a PDA (acronym for "Personal Digital Assistant"), a tablet, a game console, a netbook, a Personal Computer (or PC) or a mobile laptop.

According to a still further aspect, the invention is a second device for signing data.

According to the invention, the second device comprises or is coupled to means for storing a second part denoted $s_s$ relating to the private key. The first and the second part relating to the private key are generated to satisfy a predetermined mathematical formula. The second device is configured to receive a part-signature, to carry out a second part of a data signature by using the part-signature and the second part relating to the private key, a second result being a complete signature. And the second device is configured to send the complete signature.

As second device, it may be any electronic device comprising data processing means, comprising or being connected to data storing means, and comprising at least one I/O communication interface.

The second device may be a server.

According to a still further aspect, the invention is a system for signing data.

According to the invention, the system comprises a first device and a second device. The first device comprises or is coupled to means for storing a first part denoted $s_m$ relating to a private key. A second device comprises or is coupled to means for storing a second part denoted $s_s$ relating to the private key. The first and the second part relating to the private key are generated to satisfy a predetermined mathematical formula. The first device is configured to carry out a first part of a data signature by using data to be signed and the first part relating to the private key, a first result being a part-signature. The first device is configured to send to the second device the part-signature. And the second device is configured to receive the part-signature, to carry out a second part of a data signature by using the part-signature and the second part relating to the private key, a second result being a complete signature. And the second device is configured to send to the first device or a third device the complete signature.

**Brief description of the drawings:**

Additional features and advantages of the invention will be more apparent in the following description of one preferred embodiment of the invention, given as an indicative and non-limitative example, in conjunction with the following drawings:

- Figure 1 illustrates a simplified diagram of an embodiment of a system comprising a mobile phone and a remote server, the system being configured to issue a complete (digital) signature, according to the invention; and
- Figure 2 represents an example of a message flow between the first and the second device of figure 1, so that the first device generates a Part-Signature (or PS) by using a first key part and sends the PS to the second device that uses the PS and a second key part to generate collectively the complete signature.

**Detailed description:**

Herein under is considered a case in which the invention method for signing data is implemented by a mobile phone, as a user terminal and first device, in cooperation with a remote server, as a second device. In other words, the mobile phone, as a standalone entity, does not cooperate with any locally coupled token.

Instead of being constituted by a user terminal, the first device for signing data may be a token, as a standalone entity.

Within the present description, a token or Secure Element (or SE) is a smart object that, on the one hand, protects, as a tamper resistant component, physically access to data that the smart object stores and, on the other hand, is intended to communicate with the outside world.

As token, it may be constituted by a Subscriber Identity Module (or SIM) type smart card, a smart Universal Serial Bus (or USB) type dongle, a mass-storage card, like a MMC (acronym for "MultiMediaCard"), a SD (acronym for "Secure Digital") type card and/or any other electronic medium that may have different form factors. According to still other examples, the token is a chip to be either fixed, possibly in a removable manner, to a host computer, or soldered within a host computer, as a terminal or user terminal.

Instead of being constituted by a mobile phone, the user terminal may be, for example, a PC, a desktop computer, a tablet, a game console, a netbook, a laptop computer, a PDA or any other computing means.

According to another embodiment (not represented), the invention method for signing data is implemented by a terminal in cooperation with a token, at the client side. In other words, the terminal interacts with the token, so as to send to the remote server an intermediary result that the server uses to determine a complete signature. According to such an embodiment, the first device is adapted to carry out the functions that are carried out by the first device and that are described infra, apart from one or several security functions that are carried out by the token.

Naturally, the herein below described embodiment is only for exemplifying purposes and is not considered to reduce the scope of the invention.

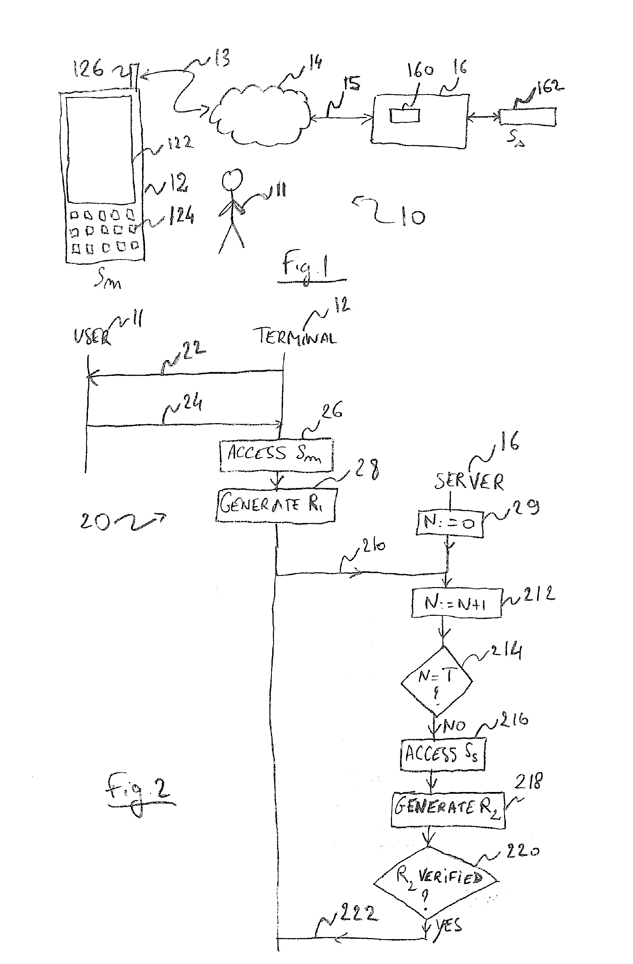

**Figure 1** shows, among others, a system 10.

The system 10 comprises a mobile phone 12, as a client and a first device, and a remote server 16, as a second device, that are configured to interact with each other, so as to sign data.

For simplicity, the mobile phone 12 and the remote server 16 are termed hereinafter respectively the mobile 12 and the server 16.

The system 10 carries out a (digital) signature generation that involves the mobile 12 that carries out a part of the signature generation and the server 16 that carries out a complementary part of the signature generation.

The mobile 12 is preferably used by a user 11 who intends to sign data in a secure manner.

The mobile 12 is provided with a display screen 122 and a keyboard 124, as Man Machine Interface (or MMI). The MMI allows a user 11 to interact with the mobile 12.

Alternately, instead of a separate keyboard 124, the mobile 12 is equipped with a touch display screen (not represented) that incorporates a virtual keyboard that is displayed.

The mobile 12 is further provided with a loudspeaker and a microphone, as MMI.

The mobile 12 has an antenna 126 that allows communicating, Over The Air (or OTA), via a long range Radio-Frequency (or RF) bi-directional link 13, through a network 14, with a server 16.

The network 14 may include one or several cellular (tele)communication networks, like a Global System for Mobile Communications (or GSM), a General Packet Radio Service (or GPRS), a Universal Mobile Telecommunications System (or UMTS), an EDGE (acronym for "Enhanced Data Rates for GSM Evolution"), a Code Division Multiple Access (or CDMA), and/or a Long Term Evolution (or LTE) type network(s).

Such a cellular communication network set is not exhaustive but only for exemplifying purposes.

The network 14 may include a WLAN (acronym for "Wireless Local Area Network") or an Internet or Intranet type network that is accessed through a short range radiocommunication link(s), like e.g. Bluetooth, Wifi, Zigbee, an Near Field Communication (or NFC) type link(s).

The mobile 12 includes one or several microprocessors (not represented), as data processing means, volatile and non-volatile memories (not represented), as means for storing data, and one or several I/O interfaces (not represented) linked together through a data and control bus (not represented).

The microprocessor processes and controls data within the mobile 12 and/or data to be exchanged with outside of the mobile 12. The microprocessor controls and communicates with all the components of the mobile 12, such as the I/O interfaces.

The memories store data notably relating to an Operating System (or OS) and applications supported by the mobile 12.

The memories may be constituted by one or several EEPROMs (acronym for "Electrically Erasable Programmable Read-Only Memory"), one or several ROMs (acronym for "Read Only Memory"), one or several Flash memories, and/or any other memories of different types, like one or several RAMs (acronym for "Random Access Memory").

A mobile 12 memory stores a first signature generation application, as an invention application supported by the mobile 12.

The mobile 12 memory stores preferably a Uniform Resource Identifier (or URI), like a Uniform Resource Locator (or URL) and/or an Internet Protocol (or IP) type address or the like, as an identifier relating to the server 16 to be addressed.

The server identifier is used by the mobile 12, acting as a client device, for transferring to the server 16 notably data to be signed along with a generated PS, as a first result resulting from the first signature generation application.

The mobile 12 memory stores preferably a client certificate relating to a signature public key, as an identifier. The client certificate is a number that includes a signature public key relating to the mobile 12. The certificate is preferably used by the mobile 12 by adding it into a message to be sent. The message to be sent includes data to be signed and an intermediary result to be used by the server 16, so as to further generate a corresponding final result, as a complete signature.

Alternately or additionally, the mobile 12 memory stores an International Mobile Equipment Identity (or IMEI), a Mobile Subscriber Integrated Services Digital Network-number (or MSISDN), and/or an email address, as an identifier(s) relating to the mobile 12.

The mobile 12 may have received a first part denoted $s_m$ relating to a private asymmetric key, termed infra the first key part $s_m$, during either its personalization (i.e. preferably at the end of the manufacture process) or a download from an external server, as a post-issuance personalization.

Alternately, instead of a previous reception of a predetermined first key part $s_m$, the mobile 12 is configured to generate the first key part $s_m$ by using e.g. a random generation algorithm.

According to an important feature of the invention, a memory of the mobile 12, like a ROM or Flash type memory, as a non-volatile memory, stores the first key part $s_m$.

The mobile 12 memory storing the first key part $s_m$ may be stored within a Trusted Execution Environment (or TEE) which has a security level that is lower than a token.

Alternately, instead of the mobile 12, a token that is coupled or connected to the mobile 12 stores the first key part $s_m$.

The mobile 12 stores preferably the first key part $s_m$ in an encrypted manner.

The mobile 12 is able to decrypt the encrypted first key part $s_m$ by using a predetermined symmetric key, so as to obtain the first key part $s_m$ in plain text.

The mobile 12 generates a symmetric key. To generate the symmetric key, the mobile 12 (or a token) uses a predetermined stored algorithm, such as e.g. a Password-Based Key Derivation (or PBKD) algorithm, and uses input data, such as a Personal Identity Number (or PIN) and/or a password, as diversification data.

The mobile 12 does not store preferably any PIN and/or password, as user authentication credentials that is verified at the server 16 side.

The entering of data allows giving an approval of the user 11, so as to launch a signature operation. Only if the entered data does match the user authentication credentials, then a right corresponding complete signature (i.e. a valid complete signature) is generated by the server 16, so as to increase a required security level for accessing the thus generated complete signature.

Alternately, instead of a symmetric key generation (or an encrypted symmetric key decryption), the mobile 12 is arranged to unlock a (stored) predetermined symmetric key (or a (stored) encrypted symmetric key) preferably further to a successful user authentication that uses data entered by the user 11.

According to another embodiment (not represented), the mobile 12 stores the first key part $s_m$ and sends to the server 16, within one and the same message, a generated PS and a PIN and/or a password, as user authentication credentials that the server 16 has to authenticate, as a Proof Of Possession.

A second part denoted $s_s$ relating to the private asymmetric key, termed the second key part $s_s$, is closely linked to the first key part $s_m$.

The first key part $s_m$ and the second key part $s_s$ are two separate and associated keys.

The first key part $s_m$ and the second key part $s_s$ have preferably to be kept secret.

The first key part $s_m$ and the second key part $s_s$ are each used for generating a partial (digital) signature. The first key part $s_m$ and the second key part $s_s$ are both used sequentially for generating the complete (digital) signature. A corresponding unique public key that is associated with the first key part $s_m$ and the second key part $s_s$ is used for verifying a corresponding complete signature.

Firstly, the first key part $s_m$ and then the second key part $s_s$ is determined.

According to a variant, firstly, the second key part $s_s$ and, secondly, the first key part $s_m$ is determined.

According to an essential invention feature, the mobile 12, as a first device, is configured to carry out a first part of a (digital) signature by using data to be signed and the first key part $s_m$.

The data to be signed, as a message M, may be a transaction, a document or any other kind of data, or a message digest that represents a fingerprint of the data to be signed. The fingerprint may be a result of a hash function, like e.g. SHA-2.

A first signature algorithm, like e.g. a River Shamir and Adleman (or RSA) type algorithm, that is used for signing data relates to public key (or asymmetric) cryptography.

The mobile 12 generates a corresponding result, as a first and part result R1, by using the data to be signed, the first key part $s_m$ and the first signature algorithm. The first result R1 is a PS, as an intermediary result, that is needed to generate a corresponding complete signature.

The mobile 12 is not able to verify the PS. The mobile 12 is also not able to generate, on its own, a complete and valid signature.

The mobile 12 is further arranged to cooperate with the server 16.

To cooperate with the server 16, the mobile 12 is able to share with the server 16 the generated PS allowing the server 16 to further determine a corresponding complete signature.

The server 16 is connected, for instance, through a cable, through a bi-directional link 15, to the network 14.

The server 16 may be operated by a Mobile Network Operator, as an MNO or a Mobile Virtual Network Operator (or MVNO), a bank operator, a service provider or on its behalf.

The server 16 is integrated within an entity of a system, as a back-end OTA system.

The server 16 is hosted by a computer.

According to a preferred embodiment, the server 16 is hosted by, coupled or connected to a Hardware Security Module (or HSM) (not represented) that stores, manages (digital) keys and provides a crypto-processing service(s) in a secure manner.

The server 16 includes a microprocessor(s) 160, as data processing means.

The server 16 is connected to a memory 162, as data storing means.

Alternatively, instead of an external memory, the server 16 includes an internal memory.

The server memory 162 stores a second signature generation application, as an invention application that is supported by the server 16.

The server 16 may be arranged to generate a second key part $s_s$, Alternatively, another entity, like e.g. a server, that is connected or coupled to the server 16 is arranged to generate and provide the server 16 with a second key part $s_s$. Assuming that the first key part $s_m$ is already generated, the second key part $s_s$ is generated, so as to satisfy a predetermined first mathematical formula.

Advantageously, the predetermined first mathematical formula is either:

$$s_s . s_m = s \bmod \phi(m); \text{ or}$$

$$s_s + s_m = s \bmod \phi(m);$$

in which:

- s denotes a private (secret) RSA type exponent;
- mod represents a modulo function;
- $\phi$ denotes a Euler's totient function; and
- m represents an RSA type modulus.

m is determined by using, for instance, the following predetermined second mathematical formula:

$$m = p^* q;$$

in which:

- \* represents a multiplication operation; and

- p and q are prime integers that may be random.

The server memory 162 stores a database, like e.g. an Oracle type database.

The database includes a set of one or several identifiers that are, each, associated with a second key part $s_s$ that is previously stored.

The second key part $s_s$ is therefore not dynamically generated by the server 16.

The identifier to be received by the server 16 is used by the server 16, so as to retrieve a second key part $s_s$ that is associated with the first key part $s_m$ that is used by the server interlocutor to generate a PS to be received by the server 16.

The identifier(s) may include a client certificate, as an identifier that is independent from any mobile network operator.

Alternately or additionally, the identifier(s) may include an IMEI, an International Mobile Subscriber Identity (or IMSI), a user identifier, a card number and/or an MSISDN.

The identifier(s) may be provided by the client device itself, a device that is locally connected or coupled to the client device and/or an entity(ies) relating or connected to a communication network that is(are) used to transmit to the server 16, besides the message to be further signed and the PS, the identifier(s).

The server 16 terminates the signature operation that is initiated from a server interlocutor which provides the server 16 with, besides a message to be signed, a PS that is necessary to issue or generate a corresponding complete signature S.

According to an essential invention feature, the server 16 is configured to carry out a second part of a (digital) signature by using the PS and the second key part $s_s$.

The server 16 is adapted to run the second signature generation application for issuing a complete signature S, as a second result R2.

The server 16 is configured to receive from any device, as a client device, a PS that is accompanied with data, as a message that is to be further signed.

Once the server 16 receives from an identified client device the PS, the server 16 retrieves from the memory 162 the second key part $s_s$ that is associated with the client device identifier(s).

The server 16 needs to receive the PS, as an intermediary result, that originates from a client device, like the mobile 12, to complete an initiated signature operation. The server 16 is not able to determine, on its own, a complete and valid signature S.

A second signature algorithm, like e.g. an RSA type algorithm, is used for signing data. The second signature algorithm is the first signature algorithm.

The server 16 generates a corresponding second result R2, by using the PS, the second key part $s_s$ and the second signature algorithm.

The server 16 is preferably able to validate that the complete signature is correct.

To validate that the complete signature is correct, the server 16 may verify whether the second result R2 does or does not match a corresponding complete signature S.

To verify the complete signature S, the server 16 analyses whether the following predetermined third mathematical formula, as one example, is satisfied:

$$S^v \bmod m = M;$$

in which:

- S represents the complete signature;
- mod denotes the modulo function;
- (v, m) represents a couple of parameters relating to the public key in which v is a public exponent and m represents the RSA type modulus; and
- M denotes a message to be (completely) signed and that accompanies the received PS.

Once the second result R2 is generated, the server 16 raises the second result R2 to the power of v (mod m) to get a resulting value. Then, the server 16 compares the resulting value to the received message M, as data to be signed.

If the resulting value does not match the received message M, then the server 16 fails to verify the complete signature and does not send the second result R2. After each (complete) signature verification failure, the server 16 may increment a ratification counter that is originally set to an initial value, like e.g. zero, so as to authorize a client device to perform one or several additional attempts. Prior to reaching a predetermined Threshold (or T), the server 16 may undertake one or several actions. Once the counter reaches the predetermined T, after a predetermined number of authorized attempts that has not to be exceeded, the server 16 aborts a transmission of the corresponding second result R2.

Alternately, instead of incrementing a ratification counter, the server 16 countdowns a counter that has been initially set to a predetermined original value, like e.g. a predetermined number of authorized attempts that has not to be exceeded to get a valid complete signature S.

Otherwise, i.e. if the resulting value does match the received message M, the server 16 succeeds in verifying the complete signature S. Once the complete signature S is successfully verified, the server 16 sends subsequently the complete signature S to either the client device or another device, like another server (not represented). The device to be provisioned with the complete signature S may be identified by the client device or another entity connected to either the client device or the server 16.

Alternatively, instead of verifying the complete signature, when the server 16 does receive neither the data to be signed nor a digest of the data to be signed, the server 16 verifies that a data structure relating to the complete signature is correct, and, only if the second device does verify the data structure relating to the complete signature is correct, then the second device sends the complete signature.

To verify that a data structure relating to the complete signature is correct, the server 16 analyses whether the resulting value of the following predetermined fourth mathematical formula has an expected data structure :

$$S^{v} \bmod m \ ;$$

in which:

- S represents the complete signature;
- mod denotes the modulo function;
- (v, m) represents a couple of parameters relating to the public key in which v is a public exponent and m represents the RSA type modulus.

The server 16 allows thus determining a complete signature S, as a definitive and second result R2.

**Figure 2** depicts an exemplary embodiment of a message flow 20 that involves the mobile 12, as a user terminal and first device, the (mobile phone) user 11 and the server 16, as a second device, to produce a complete signature.

In the described example, it is assumed that the mobile 12 stores, in an encrypted manner, a first key part $s_m$ and the server 16 stores a corresponding second key part $s_s$ that is tied to the first key part $s_m$ for one and the same client device user 11.

According to another implementation, a client device user has several first key parts $s_m$ and each first key part $s_m$ is associated with a corresponding second key part $s_s$ that is tied to the first key part $s_m$.

According to still another implementation, a first key parts $s_m$ is stored within a set of two or more client devices of one and the same user and the first key part $s_m$ is associated with a corresponding second key part $s_s$ that is tied to the first key part $s_m$.

It is also assumed that the mobile 12 exchanges with the server 16 by using e.g. HyperText Transfer Protocol (or HTTP) and/or Short Message Service (or SMS) type messages. However, any other data communication protocol between the mobile 12 and the server 16, like e.g. a secured data communication protocol (securing in confidentiality and/or in integrity the data thus exchanged) Transport Layer Security (or TLS) protocol, may be used additionally to the HTTP and/or SMS protocol(s).

It is further assumed that the mobile 12 has received (not represented) from the server 16 (or another server) a document, like an agreement or a contract, or a hash digest of the document, as data that is to be digitally signed.

The user 11 controls preferably a launching of a signature operation by entering data, as input data. The input data is used , at the mobile 12 side, as diversification data, to generate a symmetric key and allows the server 16 to authenticate the user and generate, only if the user is authenticated, the right complete signature.

The mobile 12 (and more exactly the first signature generation application) sends, through the mobile 12 MMI, to the user 11 a request message 22 including a document to be signed along with a request for giving her or his approval for signing the document, like e.g. "Do you accept to sign the document ?".

In a preferred embodiment, the request message 22 includes a request for entering a password, as user authentication credentials. According to another embodiment, instead of a password, it may be a PIN and/or biometric data, like e.g. fingerprint(s), iris , face data, as user authentication credentials. The request for entering a password requests a user to enter a password if she or he accepts to sign the document, as data to be signed.

The mobile 12 displays or presents, through the mobile 12 MMI, the document to be signed and the signature approval request.

Once the user 11 has read the document to be signed, she or he does or does not give, through the mobile 12 MMI, her or his approval for signing the document by sending back a response message 24 including either an approval or a refusal, as a response to the request message 22, respectively. To give her or his approval, the user 11 enters preferably, through the mobile 12 MMI, data, as a PIN and/or a password, as user authentication credentials.

The mobile 12 interprets the response message 24.

If the user 11 refuses to sign the presented document, i.e. if the user does not enter data, then the mobile 12 aborts (not represented) a thus initiated signature operation.

Otherwise, i.e. if the user accepts to sign the presented document, i.e. if the user does enter data, the mobile 12 continues an execution of the thus initiated signature operation by further running the first signature generation application. Then, the mobile 12 generates a symmetric key by using the entered data, as input and diversification data.

Once the mobile 12 has accessed the symmetric key (in plain text), the mobile 12 uses the symmetric key to decrypt the encrypted first key part $s_m$.

Then, the mobile 12 accesses 26 the first key part $s_m$ (in plain text).

The mobile 12 then generates 28 a first result R1 by using the document, as data to be signed, the first key part $s_m$ and the first signature algorithm. The first result R1 is a PS.

The mobile 12 sends to the server 16 a message 210 including the first result R1.

Such a message 210 includes, besides the R1, preferably the document, as data to be signed, and an identifier(s). The identifier(s) may include an identifier(s) relating to the mobile 12, like an email address, and/or the user 11, like e.g. a client device certificate.

Once the message 210 is sent, the mobile 12 may remove from its memory the input data entered by the user, the first result R1 and/or the first key part $s_m$, so as to reduce the risk that a possible attacker accesses the concerned data.

At the server 16 side, the server 16 (and more exactly the second signature generation application) sets 29 once, prior to any signature operation, preferably a ratification counter to an initial value, like e.g. zero.

The ratification counter may be linked to the identified client device or message 210.

Once the server 16 has received from a client device the message 210, the server 16 may firstly identify the client device or the message 210. Secondly, the server 16 increments 212 preferably the ratification counter by adding e.g. one unit to the previous counter value.

Then, the server 16 analyses 214 whether the ratification counter does reach a predetermined Threshold T. The predetermined T is fixed at a value that is bigger than the initial value, like e.g. three or five.

If the ratification counter does reach the predetermined T, then the server 16 aborts (not represented) the launched second signature generation application without sending any complete signature.

Otherwise, i.e. if the ratification counter does not reach the predetermined T, the server 16 continues an execution of the thus initiated signature operation by further running the second signature generation application. Then, the server 16 extracts e.g. a certificate, as an identifier relating to the client device 12 and/or the user 11, as the initiator of the message 210.

Optionally, the server 16 verifies whether the certificate has or has not been revoked. Only if the certificate has not been revoked, the server 16 continues an execution of the launched second signature generation application. Otherwise, i.e. if the certificate has been revoked, the server 16 aborts the initiated signature operation without sending any complete signature.

The server 16 retrieves or accesses 216 by using the identified client device and/or the identified user a corresponding second key part $s_s$ that is associated with the client device 12 and/or the user 11.

Once the server 16 has accessed the second key part $s_s$ (in plain text), the server 16 generates 218 a second result R2 by using the document, as data to be signed, the first result R1, the second key part $s_s$ and the second signature algorithm. The second result R2 has to be a complete Signature S that is associated with the first result R1, as PS, that originates from the client device, as the server 16 interlocutor.

Then, the server 16 verifies 220 preferably whether the (generated) second result R2 is or is not a corresponding complete Signature S.

If the second result R2 is not a corresponding S, then the server 16 terminates the signature operation without sending the second result R2. Then, the server 16 may carry out (not represented) one or several actions. For instance, as an action, besides an interdiction of a transmission of a corresponding second result R2, the server 16 sends (not represented) to the mobile 12 a message for informing the user 11 that a corresponding result of the signature operation is not valid and she or he may try again to generate a corresponding valid S. The server 16 may register, as another action, within a list, the user 11 and/or the mobile 12, as an interlocutor to be surveyed.

Otherwise, i.e. if the second result R2 is a corresponding S, the server 16 may reset (not represented) the ratification counter when applicable (i.e. when the ratification counter is used) and sends to the mobile 12 a message 222 including the S.

Alternatively, instead of addressing the mobile 12, as a sender of the first result R1, if the server 16 has previously received an identifier relating to an addressee or recipient of the resulting S, then the server 16 sends to a corresponding identified third device the S.

Subsequently, the mobile 12 uses the resulting S by sending this latter to a device that has requested to authenticate a sender or originator of the associated signed data.

Such an invention signature operation may be used for signing a transaction with an online bank server, as the server 16.

The invention signature operation needs two cryptographic operations, namely, at the mobile 12 side, a first cryptographic operation and, at the server 16 side, a second cryptographic operation that is dependent on the result of the first cryptographic operation.

The invention signature operation is secure since no device amongst the mobile 12, as first device, and the server 16, as second device, is able to produce alone the complete signature without the involvement of the other device.

The invention signature operation allows getting securely from the first device a complete signature without needing any tamper resistant component that is incorporated within or coupled to the first device.

Such an invention solution is easy to be deployed since there is no need to replace any hardware element.

The invention solution allows providing, in a seamless, quick and secure manner, a first device with a complete signature without needing to involve any tamper resistant component at the first device, as an initiator of the signature operation.

Due to an invention solution that does not require, at the first device side, any additional tamper resistant component, like an SE, connected or coupled to the first device, the invention solution is easy to be deployed.

**Claims**

1. A method (20) for signing data,
**characterized in that**, a first device (12) accessing a first part denoted $s_m$ relating to a private key, a second device (16) accessing a second part denoted $s_s$ relating to the private key, the first and the second part relating to the private key being generated to satisfy a predetermined mathematical formula, the method comprises the following steps:

   - the first device carries out a first part of a data signature by using data to be signed and the first part relating to the private key, a first result being a part-signature;
   - the first device sends to the second device the part-signature (210);
   - the second device carries out a second part of the data signature by using the part-signature and the second part relating to the private key, a second result being a complete signature; and
   - the second device sends to the first device or a third device the complete signature (222).

2. Method according to claim 1, wherein the predetermined mathematical formula comprises one element of a group comprising:

$$- s_s \cdot s_m = s \bmod \phi\, (m);$$

$$- s_s + s_m = s \bmod \phi\, (m),$$

   in which:

   - s denotes a private RSA type exponent;
   - mod represents a modulo function;
   - $\phi$ denotes a Euler's totient function;
   - m represents an RSA type modulus.

3. Method according to claim 1 or 2, wherein, prior to sending the complete signature, the second device validates that the complete signature is correct and, only if the second device does validate the signature, then the second device sends the resulting value, as the complete signature.

4. Method according to any previous claim, wherein, prior to sending the complete signature, the second device receiving from the first device the data to be signed, the second device verifies the complete signature, and, only if the second device does verify the complete signature, then the second device sends the complete signature.

5. Method according to claim 3, wherein, prior to sending the complete signature, the second device receiving from the first device neither the data to be signed nor a digest of the data to be signed, the second device verifies a data structure relating to the complete signature, and, only if the second device does verify the data structure relating to the complete signature, then the second device sends the complete signature.

6. Method according to any previous claim, wherein, prior to using the first part relating to the private key, the first device decrypts encrypted first part relating to the private key by using a predetermined symmetric key.

7. Method according to claim 6, wherein, prior to using the first part relating to the private key, the first device generates the symmetric key by using data, as diversification data, entered by a first device user.

8. A first device (12) for signing data,
**characterized in that,** the first device comprising or being coupled to means for storing a first part denoted $s_m$ relating to a private key, the first and a second part relating to the private key being generated to satisfy a predetermined mathematical formula, the first device is configured to:

   - carry out a first part of a data signature by using data to be signed and the first part relating to the private key, a first result being a part-signature; and
   - send the part-signature (210).

9. A second device (16) for signing data,
**characterized in that,** the second device comprising or being coupled to means for storing a second part denoted $s_s$ relating to the private key, the first and the second part relating to the private key being generated to satisfy a predetermined mathematical formula, the second device is configured to:

   - receive a part-signature (210);
   - carry out a second part of a data signature by using the part-signature and the second part relating to the private key, a second result being a complete signature; and
   - send the complete signature (222).

10. A system (10) for signing data,
**characterized in that,** the system comprising a first device (12) and a second device (16), the first device comprising or being coupled to means for storing a first part denoted $s_m$ relating to a private key, a second device comprising or being coupled to means for storing a second part denoted $s_s$ relating to the private key, the first and the second part relating to the private key being generated to satisfy a predetermined mathematical formula, the first device is configured to:

- carry out a first part of a data signature by using data to be signed and the first part relating to the private key, a first result being a part-signature;
- send to the second device the part-signature (210); and

**in that** the second device is configured to:

- receive the part-signature;
- carry out a second part of a data signature by using the part-signature and the second part relating to the private key, a second result being a complete signature; and
- send to the first device or a third device the complete signature (222).

126 ⌇ 13 14 15 160 16 162

122

12

124

⌇11 ⌇10

$S_m$

Fig. 1

USER ⌇11 TERMINAL ⌇12

⌇22

⌇24

26

| ACCESS $S_m$ |

28

| GENERATE $R_1$ |

SERVER ⌇16

| N := 0 | ⌇29

20 ⌇

210

| N := N+1 | ⌇212

214

N = T ?

NO ⌇216

| ACCESS $S_s$ |

218

| GENERATE $R_2$ |

220

$R_2$ VERIFIED ?

⌇222 YES

Fig. 2

11

**Europäisches Patentamt**
**European Patent Office**
**Office européen des brevets**

# EUROPEAN SEARCH REPORT

Application Number

EP 14 30 6338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 905 799 A (GANESAN RAVI [US]) 18 May 1999 (1999-05-18) * abstract * * column 3, line 44 - column 4, line 49 * * column 6, line 34 - column 7, line 56 * | 1-10 | INV. H04L9/32 |
| X | US 2002/013898 A1 (SUDIA FRANK W [US] ET AL) 31 January 2002 (2002-01-31) * abstract * * paragraphs [0006] - [0015] * * paragraphs [0030] - [0036] * | 1-10 | |
| X | "Cryptography and coding", CRYPTOGRAPHY AND CODING. IMA CONFERENCE. PROCEEDINGS, XX, XX, 1 January 1989 (1989-01-01), page COMPLETE, XP002133828, * the whole document * | 1,8-10 | |
| A | LI-SHA HE ET AL: "A new signature scheme", PROCEEDINGS OF THE 2004 ACM SYMPOSIUM ON APPLIED COMPUTING , SAC '04, 1 January 2004 (2004-01-01), page 807, XP55166398, New York, New York, USA DOI: 10.1145/967900.968066 ISBN: 978-1-58-113812-2 * the whole document * | 1-10 | TECHNICAL FIELDS SEARCHED (IPC) H04L |
| A | WO 98/25220 A1 (INST OF SYSTEMS SCIENCE [SG]; DENG HUIJIE [SG]; NGAIR TEOW HIN [SG]) 11 June 1998 (1998-06-11) * abstract * * page 3, lines 11-26 * | 1-10 | |

The present search report has been drawn up for all claims

| Place of search | Date of completion of the search | Examiner |
|---|---|---|
| Munich | 2 February 2015 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 991 262 A1

## ANNEX TO THE EUROPEAN SEARCH REPORT
## ON EUROPEAN PATENT APPLICATION NO.

EP 14 30 6338

02-02-2015

| Patent document cited in search report | | Publication date | Patent family member(s) | | Publication date |
|---|---|---|---|---|---|
| US 5905799 | A | 18-05-1999 | NONE | | |
| US 2002013898 | A1 | 31-01-2002 | US 2002013898 A1 | | 31-01-2002 |
| | | | US 2005204129 A1 | | 15-09-2005 |
| | | | US 2009217034 A1 | | 27-08-2009 |
| WO 9825220 | A1 | 11-06-1998 | AU 5893598 A | | 29-06-1998 |
| | | | EP 1012762 A1 | | 28-06-2000 |
| | | | SG 64957 A1 | | 25-05-1999 |
| | | | WO 9825220 A1 | | 11-06-1998 |